# EUROPÄISCHE PATENTANMELDUNG

(11) **EP 4 678 318 A1**
(43) Veröffentlichungstag der Anmeldung: **14.01.2026**
(21) Anmeldenummer: 25177001.2
(22) Anmeldetag: 16.05.2025
(51) Int. Cl.: B23C 5/12, B23C 3/35

(54) **PROFILFRÄSWERKZEUG**

(30) Priorität: 12.07.2024 DE 202024001323 U
(71) Anmelder: Liedtke, Adalbert, 42349 Wuppertal (DE)
(72) Erfinder: Jöcker, Stefan, 42349 Wuppertal (DE)
(74) Vertreter: Schneiders & Behrendt Bochum

(57) **Zusammenfassung**

Die Erfindung betrifft ein Profilfräswerkzeug für die Profilierung von Zylinderschlüsseln, welches einen um seine Achse drehbaren zylindrischen Grundkörper (1) aus gehärtetem Hochleistungsschnellstahl oder Hartmetall aufweist, welcher an seinem Außenumfang mit einem oder mehreren Fräszähnen (4) versehen ist, die jeweils einstückig mit dem Grundkörper (1) verbunden sind, denen jeweils eine von einer Spanfläche (7) gebildete Spankammer (2) zugeordnet ist. Um bei einem solchen Profilfräswerkzeug für eine verbesserte Spanabfuhr und Wärmeableitung zu sorgen und um die Effizienz und Lebensdauer des Werkzeuges zu erhöhen, schlägt die Erfindung vor,dass dass die Schneiden der Fräszähne (4) und die den Fräszähnen (4) zugeordneten Spankammern (2) in Bezug auf die Achse des Grundkörpers (1) jeweils spiralförmig unter einem Spiralwinkel (6) angeordnet sind, wobei die Fräszähne (4) jeweils mit in Umfangsrichtung des Grundkörpers (1) verlängerten, logarithmisch hinterschliffenen Zahnrücken (5) versehen sind.

## Beschreibung

Die Erfindung betrifft ein Profilfräswerkzeug für die Profilierung von Zylinderschlüsseln, welches einen um seine Achse drehbaren zylindrischen Grundkörper aus gehärtetem Hochleistungsschnellstahl oder Hartmetall aufweist, welcher an seinem Außenumfang mit einem oder mehreren Fräszähnen versehen ist, die jeweils einstückig mit dem Grundkörper verbunden sind und denen jeweils eine von einer Spanfläche gebildete Spankammer zugeordnet ist.

Die Herstellung von Profilnuten in Zylinderschlüsseln erfolgt in der Regel durch eine Fräsbearbeitung der Schlüsselrohlinge mit einem Profilfräswerkzeug der eingangs genannten Art. Die zu bearbeitenden Werkstoffe sind meistens Stahl, Messing oder Neusilber (Kupfer-Nickel-Zink-Legierungen). Dabei enthalten diese Werkstoffe meistens Blei und/oder Nickel, die unter anderem dazu dienen, die Fräsbearbeitung zu erleichtern. Da allerdings Nickel und Blei zu den krebserregenden Schadstoffen gezählt werden, ist europaweit beabsichtigt, diese Schadstoffe in Zylinderschlüsseln zu verbieten. Die Nutzung der zuletzt genannten Werkstoffe ist über eine befristete Sondergenehmigung der EU zurzeit noch zulässig. Da sich die Zerspanung von bleifreien Werkstoffen als ungemein schwierig darstellt, wurde hierzu Anfang 2023 ein umfangreiches, 3-jähriges Forschungsprogramm der RWTH Aachen mit mehr als 30 teilnehmenden Unternehmen, darunter die Fa. Liedtke als Werkzeuglieferant, ins Leben gerufen.

Nach dem derzeitigen Stand der Technik (vgl. beispielsweise EP 3 323 541 B1 oder der DE 10 2010 017 166 B4) haben die für die Herstellung von Profilen in Zylinderschlüsseln verwendeten Fräswerkzeuge in der Regel geradegenutete Spankammern. Diese Werkzeuge aus gehärtetem Hochleistungsschnellstahl oder Hartmetall, ausgestattet mit einer Aufnahmebohrung und meistens 12 bis 20 über den Umfang verteilten Zähnen, laufen mit Drehzahlen von 3000 bis 6000 U/min. Höhere Drehzahlen sind aufgrund der entstehenden großen Reibungshitze nicht praktikabel. Die mit diesen Werkzeugen erzielbare Profilgenauigkeit liegt bei ± 0,005 mm.

Bedingt durch die geradegenuteten Spankammern dringt bei der Verwendung der vorbekannten Profilfräswerkzeuge jeder Zahn jeweils über seine komplette Zahnbreite mit einer schlagenden Bewegung in das Werkstück ein, was sich in einem wellenförmigen Fräsbild an der Schlüsseloberfläche zeigt. Diese Oberflächenbeschaffenheit ist nicht erwünscht, jedoch mit den herkömmlichen Profilfräswerkzeugen nicht vermeidbar.

Wenn in der Zukunft für die Herstellung von Zylinderschlüsseln nur noch Werkstoffe verwendet werden dürfen, die frei von Blei und/oder Nickel sind, wird die Spanbildung zusätzlich erschwert, woraus sich entsprechend weiter verminderte Bearbeitungsqualitäten ergeben und außerdem erheblich geringerer Standzeiten der Profilfräswerkzeuge zu befürchten sind.

Als Alternative zu den Profilfräswerkzeugen der genannten Art werden seit einiger Zeit auch Wechselplattensysteme eingesetzt. Hierbei werden als Fräszähne entsprechend profilierte, auswechselbare Hartmetall-Wechselplatten verwendet, die mit einem Trägerwerkzeug verschraubt sind. Dabei hat jedes Werkzeug über den Umfang verteilt nur 2 bis 3 Fräszähne, was erheblich gesteigerte Drehzahl von 15.000 bis 20.000 U/min möglich macht, und zwar wegen der geringen Zähnezahl ohne Überhitzungsgefahr. Das Eindringverhalten der Fräszähne in das Werkstück entspricht dabei dem zuvor beschriebenen, nämlich einer schlagenden Bewegung über die komplette Zahnbreite. Die Oberflächenqualität ist jedoch aufgrund der deutlich höheren Drehzahl besser.

Solche Profilfräswerkzeuge mit Hartmetall-Wechselplatten haben jedoch grundsätzlich den Nachteil, dass die Schneiden der Fräszähne nicht nachschleifbar sind, so dass die Hartmetall - Wechselplatten nach jedem Verschleiß komplett ausgewechselt werden müssen. Es handelt sich somit um entsprechend kostspielige Einweg-Werkzeuge. Erschwerend kommt hinzu, dass die Montage, Ausrichtung und Vermessung der jeweiligen Position der Wechselplatten sehr aufwendig ist und nicht automatisierbar ist. Darüber hinaus lässt die Profilgenauigkeit zu wünschen übrig. Profilabweichungen von 0,02 bis 0,04 mm sind üblich.

Es ist Aufgabe der Erfindung, ein Profifräswerkzeug der eingangs genannten Art bereitzustellen, mit welchem sich auch bei der Bearbeitung von bleifreien, bleireduzierten, nickelfreien oder nickelreduzierten Schlüsselmaterialien eine gute Oberflächenqualität an den bearbeiteten Schlüsselprofilen erzielen lässt, und zwar bei hoher Profilgenauigkeit sowie gesteigerter Effizienz und Lebensdauer des Werkzeugs.

Zur Lösung dieser Aufgabe schlägt die Erfindung ausgehend von einem Profilfräswerkzeug der eingangs genannten Art vor, dass die Schneiden der Fräszähne und die den Fräszähnen zugeordneten Spankammern in Bezug auf die Achse des Grundkörpers jeweils spiralförmig unter einem Spiralwinkel angeordnet sind, wobei die Fräszähne jeweils mit in Umfangsrichtung des Grundkörpers verlängerten, logarithmisch hinterschliffenen Zahnrücken versehen sind.

Das Profilfräswerkzeug gemäß der Erfindung hat zunächst den Vorteil, dass wegen der deutlich verbesserten Wärmeabfuhr die Drehzahl ohne Auftreten einer Überhitzungsgefahr erheblich gesteigert werden kann. Zugleich wird wegen der besonderen Ausgestaltung der Fräszähne das Eindringverhalten der Fräszähne in das Werkstück verbessert, weil deren Eindringen in das Werkstück nicht mehr schlagartig über deren gesamte Breite erfolgt, sondern über die Breite zeitlich aufeinanderfolgend. Dieses verbesserte Eindringverhalten ist besonders wichtig bei der Bearbeitung von Materialien, die frei von Blei und oder Nickel sind. Schließlich werden durch die besondere Ausgestaltung der Fräszähne und der Spankammern im Vergleich zum Stand der Technik die entstandenen Frässpäne wesentlich schneller aus den Spankammern ausgetragen, was wiederum den Wärmeabtransport beschleunigt. Die in Umfangsrichtung des Grundkörpers verlängerten, logarithmisch hinterschliffenen Zahnrücken machen es möglich, das Profilfräswerkzeug gemäß der Erfindung durch einfaches Nachschleifen der Spanflächen sehr oft zu rekonditionieren, was zu einer erheblich gesteigerten Lebensdauer eines solchen Profilfräswerkzeuges führt.

Der Spiralwinkel, unter welchem die Fräszähne und die den Fräszähnen zugeordneten Spankammern in Bezug auf die Achse des Grundkörpers angeordnet sind, beträgt zweckmäßig 10° bis 30°. Bei einem solchen Spiralwinkel sind sowohl der Späne-Abtransport als auch der Wärme-Abtransport optimal.

Um den Wärme-Abtransport noch weiter zu verbessern, ist schließlich noch vorgesehen, dass in dem Grundkörper geneigte, auf die Spankammern ausgerichtete Kühlkanäle für die Zuführung von Kühlmitteln angeordnet sind. Über diese Kühlkanäle kann zur Unterstützung des Fräsvorganges ein Kühlmittel und erforderlichenfalls auch ein Schmiermittel in minimalen Mengen zugeführt werden.

Vorzugsweise ist die Anzahl der Fräszähne beim Profiwerkzeug gemäß Erfindung auf 1 bis 3 beschränkt. Hierdurch ist es möglich, die logarithmisch hinterschliffenen Zahnrücken der Fräszähne in Umfangsrichtung besonders lang auszubilden, so dass ein solches Profilfräswerkzeug bis zu 50 mal rekonditioniert werden kann.

Zwei Ausführungsbeispiele eines Profilfräswerkzeuges gemäß der Erfindung wird im Folgenden anhand der beigefügten Zeichnung näher erläutert.

Es zeigen:
Figur 1: Ein Profilfräswerkzeug gemäß der Erfindung in einer ersten, mit zwei Fräszähnen versehenen Ausführungsform, und zwar eine Ansicht dieses Profilfräswerkzeuges in Blickrichtung der Drehachse des Grundkörpers und eine Draufsicht von oben auf dieses Profilfräswerkzeug;
Figur 2: einen Querschnitt (obere Hälfte) und eine Seitenansicht (untere Hälfte) zu dem in Figur 1 dargestellten Profilfräswerkzeug;
Figur 3: vergrößert das Detail A aus Figur 1 mit einer Ansicht der von dem Fräsprofil begrenzten Spanfläche unter einem Spanwinkel von 0° und einem Spiralwinkel von 0°;
Figur 4: perspektivisch ein Profilfräswerkzeug gemäß der Erfindung in einer Ausführungsform mit nur einem Fräszahn;

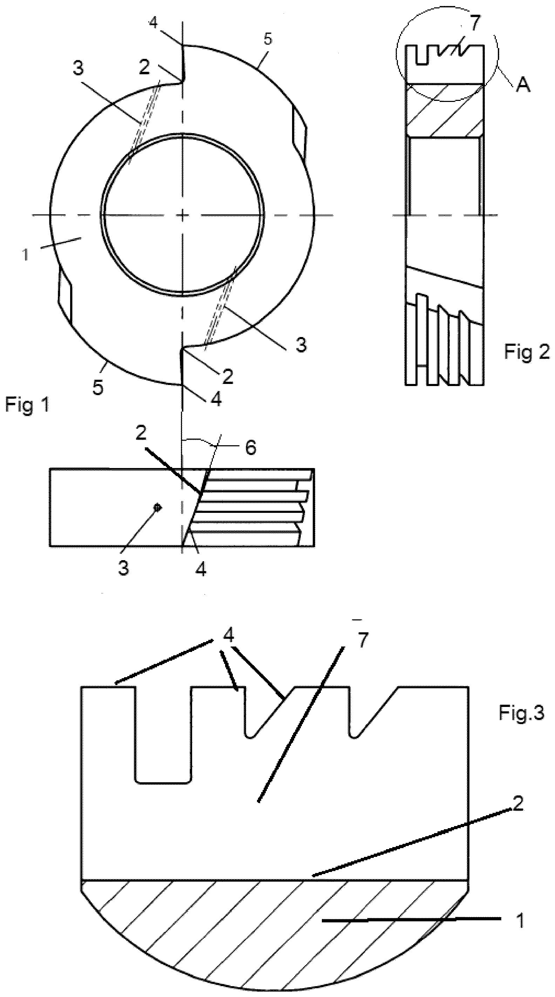

In der Zeichnung ist der als zylindrischer Hohlkörper ausgebildete Grundkörper der Profilfräswerkzeuge gemäß der Erfindung die mit dem Bezugszeichen 1 bezeichnet. Dieser Grundkörper 1 besteht gehärtetem Hochleistungsschnellstahl oder aus Hartmetall und ist an seinem Außenumfang einstückig mit umlaufenden Fräszähnen 4 versehen, denen jeweils eine von einer Spanfläche 7 gebildete Spankammer 2 zugeordnet ist. Die die Spankammern 2 bildenden Spanflächen 7 sind nach außen hin von den Schneiden der Fräszähne 4 begrenzt. Dabei haben diese Schneiden das in das Werkstück einzufräsende Profil, welches in Figur 3 vergrößert dargestellt ist.

Wie insbesondere aus Figur 1 (Draufsicht von oben) hervorgeht, sind nach der Lehre der Erfindung die Schneiden der Fräszähne 4 und die diesen zugeordneten Spankammern 2 in Bezug auf die Achse des Grundkörpers 1 spiralisiert unter einem Spiralwinkel 6 mit einem Winkelmaß von 10° bis 30° angeordnet.

Weiterhin sind die Fräszähne 4 jeweils mit einem in Umfangsrichtung des Grundkörpers 1 verlängerten, logarithmisch hinterschliffenen Zahnrücken 5 versehen. Diese Zahnrücken haben über ihre Länge das gleiche Profil wie die Zahnschneiden. Durch den logarithmischen Hinterschliff wird sichergestellt, dass die derart verlängerten Fräszähne 4 bis zu 50 mal durch Nachschleifen der Spanflächen7 rekonditioniert werden können, ohne dass sich bei abnehmendem Außenumfang des Profilfräswerkzeuges die Spanwinkel der Fräszähne 4 verändern.

Schließlich ist der Grundkörper 1 des Profilfräswerkzeuges noch mit geneigten, von ihnen nach außen verlaufenden Kühlkanälen 3 versehen, die im Bereich der Spankammern 2 ausmünden und über die ein geeignetes Kühlmittel oder im Bedarfsfall auch in geringen Mengen ein Schmiermittel zugeführt werden kann.

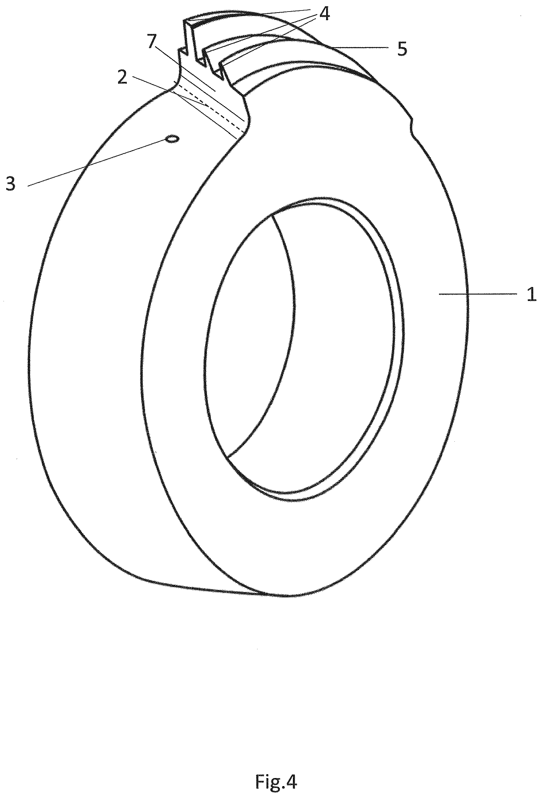

Das in Figur 4 dargestellte Ausführungsbeispiel entspricht in seinem Aufbau in seiner Funktion weitestgehend dem Ausführungsbeispiel der Figuren 1 bis 4, mit dem Unterschied, dass hier am Umfang des Grundkörpers 1 lediglich ein einziger Fräszahn 4 angeordnet ist, der dementsprechend einen noch weiter verlängerten Zahnrücken 5 hat und dementsprechend noch öfter rekonditioniert werden kann.

Abweichend von den dargestellten Ausführungsbeispielen sind im Rahmen der Erfindung viele Varianten möglich, insbesondere was die anwendungsspezifische Profilierung der Zahnschneiden sowie die davon abhängige Ausgestaltung der Fräszähne und der Spankammern angeht.

Ein optimales Oberflächenbild am Produkt wird durch eine genaue Abstimmung von Werkzeuggeometrie, Prozessparametern und zu bearbeitende Material erzielt. Maßgebend hierfür sind die erfindungsgemäß gelehrte Spiralverzahnung in Verbindung mit den logarithmisch hinterschliffenen Zahnrücken und der verhältnismäßig geringen Zähnezahl , welche einen Hochfrequenzbetrieb mit Drehzahlen von 20.000 bis 40.000 Umdrehungen/min sinnvoll macht.

Durch die höhere Drehzahl und das verbesserte Eindringverhalten der Fräszähne in den Werkstoff werden der Schnittdruck im Fräsprozess reduziert, die Prozesszeit verkürzt und die Oberflächen am Endprodukt verbessert. Infolgedessen können ohne weiteres Profilgenauigkeiten von ±0,005 mm erreicht werden können, und zwar auch bei blei- und nickelfreien Schlüsselmaterialien. Die mögliche innere Kühlmittelzuführung bzw. Minimalmengenschmierung wirkt sich darüber hinaus positiv auf den Zerspanungsprozess und auf die Oberflächenqualität aus.

### Liste der Bezugszeichen:

- 1: Grundkörper
- 2: Spankammer
- 3: Kühlmittelkanal
- 4: Fräszahn (Schneide)
- 5: Zahnrücken
- 6: Spiralwinkel
- 7: Spanfläche

## Patentansprüche

1. Profilfräswerkzeug für die Profilierung von Zylinderschlüsseln, welches einen um seine Achse drehbaren zylindrischen Grundkörper (1) aus gehärtetem Hochleistungsschnellstahl oder Hartmetall aufweist, welcher an seinem Außenumfang mit einem oder mehreren Fräszähnen (4) versehen ist, die jeweils einstückig mit dem Grundkörper (1) verbunden sind denen jeweils eine von einer Spanfläche (7) gebildete Spankammer (2) zugeordnet ist,
**dadurch gekennzeichnet,**
**dass** die Schneiden der Fräszähne (4) und die den Fräszähnen (4) zugeordneten Spankammern (2) in Bezug auf die Achse des Grundkörpers (1) jeweils spiralförmig unter einem Spiralwinkel (6) angeordnet sind, wobei die Fräszähne (4) jeweils mit in Umfangsrichtung des Grundkörpers (1) verlängerten, logarithmisch hinterschliffenen Zahnrücken (5 versehen sind.

2. Profilfräswerkzeug nach Patentanspruch 1, **dadurch gekennzeichnet, dass** der Spiralwinkel (6) 10° bis 30° beträgt.

3. Profilfräswerkzeug nach Patentanspruch 1 oder 2, **dadurch gekennzeichnet, dass** in dem Grundkörper (1) geneigte, auf die Spankammer (2) ausgerichtete Kühlkanäle (3) angeordnet sind.

4. Profilfräswerkzeug nach einem der Patentansprüche 1 bis 3, **dadurch gekennzeichnet, dass** sie Anzahl der Fräszähne (4) auf 1 bis 3 beschränkt ist.
